(19) Europäisches Patentamt
European Patent Office
Office européen des brevets

(11) EP 0 664 817 B1

(12) EUROPÄISCHE PATENTSCHRIFT

(45) Veröffentlichungstag und Bekanntmachung des Hinweises auf die Patenterteilung:
**26.04.2000 Patentblatt 2000/17**

(21) Anmeldenummer: **94923838.0**

(22) Anmeldetag: **18.08.1994**

(51) Int. Cl.[7]: **C08G 59/14**, C08L 67/06

(86) Internationale Anmeldenummer:
**PCT/PL94/00017**

(87) Internationale Veröffentlichungsnummer:
**WO 95/05410 (23.02.1995 Gazette 1995/09)**

# (54) HILFSMITTEL ZUR VERARBEITUNG VON KUNSTSTOFFEN, VERFAHREN ZUR HERSTELLUNG VON DIESEM HILFSMITTEL UND VERFAHREN ZUR HERSTELLUNG VON REDUZIERTE MONOMEREMISSION AUFWEISENDEM POLYESTERHARZ

PLASTICS PREPARATION AUXILIARY AGENT, PROCESS FOR PRODUCING THE SAME AND PROCESS FOR PREPARING REDUCED MONOMER EMISSION POLYESTER RESIN

ADJUVANT DE PREPARATION DE MATIERES PLASTIQUES, SON PROCEDE DE PRODUCTION ET PROCEDE DE PRODUCTION DE RESINES POLYESTER A EMISSION DE MONOMERE REDUITE

(84) Benannte Vertragsstaaten:
**DE FR GB**

(30) Priorität: **18.08.1993 PL 30013093**
**24.09.1993 PL 30048493**

(43) Veröffentlichungstag der Anmeldung:
**02.08.1995 Patentblatt 1995/31**

(73) Patentinhaber:
**Instytut Chemii Przemyslowej**
**01-793 Warszawa (PL)**

(72) Erfinder:
- **KICKO-WALCZAK, Ewa**
  **PL-00-851 Warszawa (PL)**
- **GRZYWA, Edward**
  **PL-02-954 Warszawa (PL)**
- **WOJDAK, Wojciech**
  **PL-02-531 Warszawa (PL)**
- **JAKUBAS, Tadeusz**
  **PL-37-310 Nowa Sarzyna (PL)**
- **SZCZEPANOWSKA, Maria**
  **PL-37-310 Nowa Sarzyna (PL)**
- **MENTAL, Zdzis$m(D)aw**
  **PL-37-310 Nowa Sarzyna (PL)**
- **KRAWCZYK, Barbara**
  **PL-37-310 Nowa Sarzyna (PL)**

(74) Vertreter:
**Schwabe - Sandmair - Marx**
**Stuntzstrasse 16**
**81677 München (DE)**

(56) Entgegenhaltungen:
**EP-A- 0 475 260**

- **CHEMICAL ABSTRACTS, vol. 112, no. 4, 22. Januar 1990, Columbus, Ohio, US; abstract no. 21754, PENCZEK ET AL 'Auxiliary agent for processing plastics and preparation' in der Anmeldung erwähnt & PL,B,141 789 (INSTYTUT CHEMII PRZEMYSLOWEJ) 30. April 1988**
- **CHEMICAL ABSTRACTS, vol. 112, no. 8, 19. Februar 1990, Columbus, Ohio, US; abstract no. 57466, PENCZEK ET AL 'Auxiliary agent for processing plastics and its preparation' & PL,B,141 771 (INSTYTUT CHEMII PRZEMYSLOWEJ) 31. Mai 1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 664 817 B1

## Beschreibung

Hilfsmittel zur Verarbeitung von Kunststoffen, Verfahren zur Herstellung von diesem Hilfsmittel und Verfahren zur Herstellung von reduzierte Monomeremission aufweisendem Polyesterharz.

Gegenstand der Erfindung ist Hilfsmittel zur Verarbeitung von Kunststoffen, Verfahren zur Herstellung von diesem Hilfsmittel, das in Kunstoffen verwendet wird und Verfahren zur Herstellung von reduzierte Monomeremission aufweisendem Polyesterharz. Gegenstand der Erfindung umfaßt auch chemische Synthese vom Hilfsmittelhauptbestandteil sowie Zusammensetzung von Gemisch von diesem Bestandteil mit langkettigen Fettsäureamiden und/oder -salzen von zweiwertigen Metallen und gegebenenfalls Fettsäureestern und/oder Polyethylenewachsen und Verfahren zur Herstellung von Polyesterharz, das in Einführung von dem Hilfsmittel als Modifikator besteht.

Bei der Verarbeitung von Kunststoffen werden als Gleitmittel u.a. Hydroxyester oder Epoxidester, die im allgemeinen entweder niedrige Schmelztemperaturen haben oder trotz der hohen Schmelztemperatur schlechte Kompatibilität mit Kunststoffen aufweisen.

Aus polnischen Patentbeschreibungen 121436 und 125545 sind Hydroxyester bekannt, die Gleitmitteleigenschaften aufweisen und die als des Styrolabdampfen aus ungesättigten Polyesterharzen reduzierenden Additive verwendet werden.

Diese bekannten Hydroxyester sind Produkte der Addition von langkettigen Fettsäuren und Bisphenol-A-epoxidharzen. Da diese Harze beschränkte Löslichkeit in organischen Lösemitteln aufweisen, können sie nicht als konzentrierte Lösungen in diesen Lösemitteln bei der Verarbeitung verwendet werden.

Die aus polnischen Patentbeschreibungen 141789 und 141790 bekannten Hilfsmittel weisen in organischen Lösemitteln, insbesonders in aromatischen Kohlenwasserstoffen, bessere Löslichkeit auf. Diese Epoxidester sind Produkte der Addition der langkettigen Fettsäuren und Harzsäuren von Kolophonium und Epoxidverbindungen.

Die obengennanten Erfindungen haben den Nachteil, daß neben den Hauptbestandteilen auch Paraffin (Schmelztemperatur 45-60°C) angewendet werden muß, um die wesentliche Reduzierung von Styrolabdampfen bei Produktionsverarbeitung von ungesättigten Polyesterharzen zu erreichen. Es ist auch mit Reduzierung von Zwischenschichtadhäsion von Polyesterglaslaminaten, besonders bei Herstellung von Laminaten mit wet-on-dry Verfahren verbunden. Man beobachtet dieser Effekt nach der langfristigen Benutzung der in diese Weise hergestellten Laminaten, besonders im Falle der in Jachten und Schiffen angewendeten Laminaten. Unerwartet wurde festgestellt, daß die Styrolemission aus ungesättigten Polyesterharzen durch Anwendung von Hilfsmitteln gemäß Anspruch 1 oder 2 oder deren Verwendung gemäß einem der Ansprüche 3 bis 7 verringert werden kann. Erfindungsgemäß handelt es sich im Hilfsmittel, die ein Gemisch von Verbindung der allgemeinen Formel BCOO-A-OOCB', worin A eine Gruppe der allgemeinen Formel 1 bedeutet, B eine Gruppe der Formel $CH_3(CH_2)_x$ , worin x von 11 bis 23 beträgt, bedeutet, B' eine durch Abnehmen von Wasserstoff aus Kolophoniummolekül entstandene Gruppe bedeutet, wobei Kolophonium ein Gemisch von Abietinsäure, Levopimarinsäure, Neoabietinsäure und Palustrinsäure ist, mit Zugabe von Fettsäureamid und/oder -salzen von zweiwertigen Metallen und gegebenenfalls Fettsäureestern und/oder Polyethylenwachsen (Molekülmasse 300-5000) in einer Menge von 2 bis 50 Teilen langkettige Fettsäuremid und/oder -salze von zweiwertigen Metallen und gegebenenfalls Fettsäureester und/oder Polyethylenwachse, per 100 Teile Verbindung der allgemeinen Formel BCOO-A-OOCB', worin A, B, B' die obengegebene Bedeutung haben.

Hilfsmittel gemäß der Erfindung lösen sich sehr gut in ungesättigten Polyesterharzen als auch in organischen Lösenmittel. Sie reduzieren Styrolemission sehr effektiv und haben keinen negativen Einfluß auf die mechanischen Eigenschaften von Polyesterglaslaminaten, vor allem keinen negativen Einfluß auf die Zwischenschichtadhäsion dieser Laminate.

Hilfsmittel gemäß der Erfindung werden bei erhöhter Temperatur und in Gegenwart von Aminkatalysator durch Additionsreaktion von Verbindungen der Formel $CH_3(CH_2)_xCOOH$, worin x von 11 bis 23 beträgt, und Kolophonium zu Epoxidharz und dann durch Zugabe der Fettsäureamiden und/oder -salzen von zweiwertigen Metallen (Fettsäurekette $C_{11-18}$) und gegebenenfalls Polyethylenwachsen von Molekularmasse 300-5000 dargestellt.

Als Verbindungen der allgemeinen Formel $CH_3(CH_2)_xCOOH$ werden meistens gesättigte Fettsäuren, vorteilhaft Stearinsäure, Laurinsäure verwendet. Anstatt der gesättigten Fettsäuren können ungesättigte Fettsäuren verwendet werden, vorteilhaft Oleinsäure.

Als Epoxidharze werden vor allem Bisphenol-A-epoxidharze von Epoxidwert 0.21-0.51 verwendet.

Als Fettsäureamid wird vor allem Ethylendistearinamid verwendet.

Als Derivate von Fettsäuren und Salzen von zweiwertigen Metallen werden meistens Salze von Blei, Kalzium, Zink und Stearinsäure verwendet.

Als Ester von langkettigen Fettsäuren wird vor allem Stearin verwendet.

Als Polyethylenwachse werden Kohlenwasserstoffe von Molekülmasse von 300 bis 5000 verwendet.

Gemäß der Erfindung können Reaktiondern in beliebiger Folge eingeführt werden, wobei Verbindungen der allgemeinen Formel BCOO-A-OOCB' bei einem Gewichtsvärhältnis Fettsäure/Kolophonium von 0,1:1,0 bis 5,0:1,0 hergestellt werden.

Mengenverhältnis Epoxidharz/Gesamtmenge Fettsäuren + Kolophonium ist bei Erhaltung von Verhältnis: Epoxidwert von Carboxylsäure/Carboxylgruppen: von 0,50:1,0 bis 1,5:1,0.

Hilfsmittel, die vorteilhafte Eigenschaften aufweisen, werden durch Zusammenmischen und -schmelzen von Verbindung der allgemeinen Formel BCOO-A-OOCB' mit 2-50 Gew.-Teilen Fettsäureamid und -salze von zweiwertigen Metallen und/oder Fettsäureester und/oder Polyethylenwachse (von Molekülmasse 300-5000) hergestellt.

Zugabe von 0,1-7,0 Gew.-Teilen Paraffin zu der entstandenen Mischung beseitigt vollständig Styrolabdampfen aus ungesättigtem Polyesterharz, was im Labor 1 Std. nach Zugabe dieser Mischung untersucht wurde.

Unerwartet wurde festgestellt, daß die sehr geringe Styrolemission aufweisenden ungesättigten Polyesterharze, aus denen die gute Zwischenschichtadhäsion aufweisenden Polyesterglaslaminate (sogar wenn folgende Schichten 7 oder 14 Tage nach einer vorgeformten und gehärteten Schicht aufgelegt werden) hergestellt werden können, erhalten werden, wenn obiges Harz ein geeignetes Gemisch von Verbindungen enthält.

Die obengenannte Mischung weist gute, langfristige Stabilität auf und im Gegensatz zu den früheren Lösungen - keine Tendenz zur Ausscheidung von Modifikatoren aus der Lösung. Außerdem kann die Mischung im Fall von sowohl ungesättigten Orthophthalpolyestersäuren als auch Isophthalharzen und Vinylesterharzen verwendet werden.

Gemäß der Erfindung werden zu 100 Gew.-Teilen ungesättigtes Polyesterharz 0,05-5,0, vorteilhaft 0,5-2,0, Gew.-Teile Gemisch von Verbindungen der allgemeinen Formel BCOO-A-OOCB', worin A eine Gruppe der allgemeinen Formel 1 bedeutet, B eine Gruppe der Formel $CH_3(CH_2)_x$, worin x von 11 bis 23 beträgt, bedeutet, B' - eine durch Abnehmen von Wasserstoff aus Kolophoniummolekül entstandene Gruppe bedeutet, wobei Kolophonium ein Gemisch von Abietinsäure, Levopimarinsäure, Neoabietinsäure und Palustrinsäure ist, mit Zugabe von Fettsäuremid und/oder -salz von zweiwertigen Metallen und gegebenenfalls Fettsäureestern und/oder Polyethylenwachsen (Molekülmasse 300-5000) in einer Menge von 2 bis 50 Teilen langkettige Fettsäuremid und/oder -salz von zweiwertigen Metallen und gegebenenfalls Fettsäureester und/oder Polyethylenwachse, in Bezug auf 100 Teile Verbindung der allgemeinen Formel BCOO-A-OOCB', worin A, B, B' die obengenannte Bedeutung haben, zugesetzt.

Hilfsmittel gemäß der Verbindung sind sehr gut löslich sowohl in ungesättigten Polyesterharzen als auch in organischen Lösemitteln.

Besonders vorteilhaftes Verfahren zur Additiveneinführung besteht darin, daß die Additive in organischen Lösemitteln (darunter auch in Xylol, Toluol, Lackbenzin) und in ihren Gemischen sehr gut löslich sind und deshalb können sie in Polyesterharze als eine hoher Gehalt von Modifikatoren (bis zu 90% Gew. ) enthaltende Paste eingeführt werden. Die vorgeschlagenen Additive lösen sich auch in allen allgemeinbekannten Polyesterharzen gut, ohne Tendenz zur Ausscheidung von Additiven aus der Lösung.

Die zu Polyesterharzen eingeführten Additive werden bei erhöhter Temperatur und in Gegenwart von Aminkatalysator durch Additionsreaktion von Verbindungen der Formel $CH_3(CH_2)_xCOOH$, worin x von 11 bis 23 beträgt, und Kolophonium zu Epoxidharz und dann Zugabe von Fettsäureamid und/oder -salz von zweiwertigem Metall (Fettsäurekette $C_{11-18}$ ) und gegebenenfalls von Fettsäureestern und/oder Polyethylenwachsen (Molekülmasse 300-5000), hergestellt.

Zu den gemäß der Erfindung verwendeten ungesättigten Polyesterharzen gehört hauptsächlich Styrol als vernetzendes Monomer jedoch die obengenannten Additive können auch im Fall von ungesättigten Polyesterharzen, die solche vernetzende Monomeren wie z.B. Styrolderivate, Acryl- oder Metacryloligoester, einzeln oder im Gemisch, enthalten, verwendet werden.

Die zu diesen Harzen gehörenden ungesättigten Polyester bestehen aus Maleinsäure- oder Fumarsäureresten, Resten von Glykol, wie Ethylenglykol, Diethylenglykol, 1,2-Propylenglykol, Dipropylenglykol, 1,3-Butylenglykol, Neopentylglykol, Dibromoneopentylglykol und Chloromethylethylenglykol und 2,2-Di-(p-hydroxypropoxyphenyl)propan, Epichlorohydrine und Reste von Dicarboxylsäuren wie Phthalsäure, Isophthalsäure, Terephthalsäure, Adipinsäure und Sebacinsäure und Säure - Derivaten von Dienaddukten von Maleinanhydrid mit Cyclopentadien, Hexachlorocyclopentadien, Naphthol oder Anthracen und aus Maleopimarsäureresten.

Ungesättigte Polyesterharze gemäß der Erfindung können außerdem bekannte Additive, wie Inhibitore, z.B. Hydrochinon, thixotrope Additive z.B. aktives Silikat, Antipyrene, z.B. Pentabromoethylbenzol, minerale Füllstoffe z.B. Kreide, Kaolin, Talk oder Schnittglasfaserstoff und Verdickungsmittel z.B. Magnesiumoxid und Flammschutzmittel, enthalten.

Sie werden mit bekannten Verfahren gehärtet, insbesondere nach der früheren Sättigung von Glasfaserstoffen (in der Form von Gewebe, Matte oder Roving) mit dem Harz, indem Peroxydhärter oder Perhydrohärter mit Zugabe von Beschleunigern, wie tertiäre aliphatisch-aromatische Amine oder Kobalt- oder Wanadiumverbindungen, verwendet werden. Härtung kann auch mit bekannten Verfahren mit Hilfe von UV-Strahlung oder Strahlung im visuellem Bereich durch Verwendung von geeigneten Sensibilisatoren oder mit Hilfe von Gammastrahlen oder Elektronenstrom durchgeführt werden.

Wesentlicher Vorteil des Verfahrens gemäß der Erfindung besteht in Reduzierung von Styrolemission aus verarbeiteten Polyesterharzen zu Minimalwert, sehr gute Löslichkeit der Modifikatoren in allen allgemeinverwendeten organischen Lösemitteln und, vor allem, die Möglichkeit der Herstellung von Polyesterglaslaminaten mit beliebiger Verfahren, darunter auch mit wet-on-dry Verfahren.

Die vorliegende Erfindung wird in den nachfolgenden Beispielen, erläutet.

Beispiel 1.

In einem mit Rührer, Kühler und Thermometer versehenen Reaktor wird bei 130°C 70,0 g Epoxidharz Epidian 5 (Epoxidwert 0,52), 45,0 g Kolophonium und 44,0 g Stearinsäure, in Gegenwart von 0,3 g Triäthanoloamin als Katalysator, erwärmt. Die Reaktion wird 3 Std. fortgesetzt bis Säurezahl 10 mg KOH/g ist. Zum Reaktionsprodukt werden bei 55°C 32,0 g Ethylendistearinamid und 16,5 g Polyethylenwachs (Molekülmasse $M_n$=1000) zugesetzt. Nach der Abkühlung ist die Mischung Feststoff (Schmelztemperatur 46°C).

Beispiel 2.*

Bei 110°C werden 100,0 g Diglycidyläther von Butandiol-1,4, 75,0 g Oleinsäure und 80,0 g Kolophonium in Gegenwart von 0,5 g Triäthanolamin erwärmt. Die Reaktion ist bei 110°C 2 Std. fortgesetzt bis Säurezahl 8 mg KOH/g ist. Zum Reaktionsprodukt ist bei 50°C 45,0 g Stearin, 15,0 g Ethylendistearin amid und 15,0 g Polyethylenwachs (Molekülmasse $M_n$=300) zugesetzt. Das entstandene Gemisch wird in 120,8 g Xylol gelöst. Nach der Kühlung weist die Mischung Pastenkonsistenz auf und sedimentiert beim Lagern nicht.

Beispiel 3.

100,0 g Bisphenol-A-epichlorohydrinharz (Epoxidwert 0,40) wird während 1 Std. mit 75,2 g Palmitinsäure und 42,2 g Kolophonium im Gegenwart von 0,1 g N,N'-Dimethylbenzylamin erwärmt. Zu dem geschmolzenen Reaktionsprodukt wird 22,8 g Stearin und 32,5 g Polyethylenwachs (Molekülmasse $M_n$=1500) zugegeben. Die entstandene Mischung wird in 78,8 g Toluol gelöst. Nach der Abkühlung weist die Mischung Pastenkonsistenz auf und läßt sich leicht in ungesättigte Polyesterharze einführen.

Beispiel 4.

35,2 g Bisphenol-A-epoxidharz (Epoxidwert 0,35) wird mit 16,5 g Stearinsäure und 15,2 g Kolophonium in Gegenwart von 0,05 g Triäthanolamin bei 150°C während 5 Std. erwärmt. Nach 5 Std. beträgt die Säurezahl von Produkt 3 mg KOH/g. Bei 60°C wird zu dem in diese Weise erhaltenen Produkt 32,5 g Ethylendistearinamid und 35,8 g Polyethylenwachs (Molekülmasse $M_n$=300) zugegeben. Die nach der Kühlung erhaltene Mischung hat Schmelztemperatur 39°C und löst sich gut in Polyesterharz ohne Trübung zu verursachen.

Beispiel 5.*

100 g Diglycidyläther von Diethylenglykol, 78,5 g Kolophonium und 65,7 g Stearinsäure in Gegenwart von 0,3 g Triäthanolamin werden bei 120°C während 3 Std. erwärmt. Nachdem die Säurezahl 5 mg KOH/g ist, wird bei 55°C 20,0 g Ethylendi-stearinamid, 38,0 g Polyethylenwachs (Molekülmasse $M_n$=1000) und 15,7 g Gemisch Glyzerinmonostearinat und Kalziumstearinat zugegeben. Die nach der Kühlung erhaltene Mischung hat Schmelztemperatur 41°C und löst sich gut in Aromaten.

Beispiel 6

Ein Gemisch von 100,0 g Bisphenol-A-epichlorohydrinharz (Epoxidwert 0,40), 75,2 g Stearinsäure und 42,2 g Kolophonium wird in Gegenwart von 0,3 g Triäthanoloamin bei 120°C 3 Std. erwärmt. Zu dem geschmolzenen Reaktionsprodukte wird 32,0 g Ethylendistearinamid und 16,5 g Polyethylenmikrowachs zugegeben. Das erhaltene Produkt löst sich (10,3 g in 1000 g) in Malein-Fumar-Phthal-Propylenepolyesterharz, das 33% Styrol enthält. Die Lösung wird in Petrischale (Oberfläche: 95 $cm^2$; Seitenwandhöhe: 10 mm) eingegossen und in einem Platz mit konstanter Luftstromgeschwindigkeit (0,4 m/s) bei 22°C gestellt. Die Petrischale mit dem Harz wird unmittelbar vor Beginn des Abdampfenversuches und dann nach 60 min gewogen. Eine Probe mit demselbem Harz aber ohne Additiv wird zum Zwecke des Vergleiches verwendet. Die Effektivität von Additivwirkung E [%] wird mit folgender Formel berechnet:

* Vergleichsbeispiele

* Vergleichsbeispiele

$$E = \frac{m_0 - m}{m_0} * 100\ \%$$

worin: $m_0$ - Massenverlust (wegen des Styrolabdampfens) von Harz ohne Additiv.
m - Massenverlust von Harz mit Additiv bedeuten.

In dem untersuchten Fall beträgt die Effektivität 99,8 %. Die Zwischenschichtadhäsion wird visuell im Falle von Verbindung von Glasmatte mit einer faserlosen Harzschicht, nach Beschreibung in Plastics Review (British Industrial Plastics) 1981, No. 11, 4., bewertet.

Die Zwischenschichtenadhäsion kann im vorliegenden Fall als sehr gut bezeichnet werden: auf der ganzen Oberfläche von Zerreißen lassen sich "trockene" Glasfaserstoffe und keine Delamination, die glatte Stellen auf Trennungsoberfläche lassen würde, beobachten. Mit der verwendeten Methode, wurde die höchste Note "3" erreicht (Bewertungsskala von 1 bis 3); die zweite Laminatenschicht wurde 7 Tage nach der ersten Schicht aufgelegt.

<u>Beispiel 7</u>

In einem mit Rührer, Kühler und Thermometer versehenen Reaktor wird bei 130°C 70,0 g Epoxidharz Epidian 5 (Epoxidwert 0,52), 45,0 g Palmitinsäure, 45,0 g Kolophonium in Gegenwart von 0,1 g N,N'-Dimethyl- benzylamin erwärmt bis Säurezahl 10 mg KOH/g erreicht ist. Zum Reaktionsprodukt wird bei 55°C 22,8 g Stearin und 17,0 g Ethylendistearinamid zugegeben. Das Produkt löst sich in 120,0 g Xylol. Die nach der Abkühlung erhaltene Mischung hat Pastenkonsistenz und sedimentiert beim Lagern nicht.

Die erhaltene Paste (15,5 g) löst sich in 1000 g Malein-Fumar-Propoxyl-Bisphenol-A-polyesterharz (50% Styrol). Effektivität von Additivwirkung wird wie im Beispiel 6 untersucht. Die Effektivität beträgt 99,5%. Die Zwischenschichtadhäsion von in diese Weise modifiziertem Harz wird mit Stoßmethode mit Hilfe von modifiziertem DuPontapparat untersucht. In diesem Verfahren wird die Delaminationsoberfläche auf dem Laminat (Zeitpause 7 Tage) mit Planimeter gemessen. Die Delaminationsoberfläche beträgt 178 $mm^2$ (die mit gleicher Methode gemessene Delaminationsoberfläche von mit unmodifiziertem Harz hergestelltem Laminat beträgt 175 $mm^2$).

Einführung von Additiven verschlechterte die Adhäsion von separat aufgelegtem Laminatschichten nicht.

<u>Beispiel 8</u>.*

100 g Diglycidyläther von Diethylenglykol, 78,5 g Kolophonium und 65,7 g Stearinsäure wird bei 150°C in Gegenwart von 0,1 g Triäthanolamin erwärmt. Nachdem Säurezahl 5 mg KOH/g erreicht ist, wird bei 50°C 20,0 g Ethylendistearinamid, 38,0 g Polyethylenwachs (Molekülmasse $M_n$=600) und 15,7 g Gemisch von Glyzerinmonostearinat und Kalziumstearinat zugegeben. Nach der Abkühlung, hat die erhaltene Mischung Schmelztemperatur 41°C und löst sich gut in Aromaten sowie in Polyesterharzen. Das Produkt (15,0 g) löst sich in 1000 g Malein-Fumar-Phthalepichlorohydrinpolyesterharz. Effektivität von Additivwirkung wird analogisch wie im Beispiel 6 untersucht.

Zwischenschichtadhäsion von mit wet-on-dry Verfahren hergestelltem Laminat (Zeitpause 12 Tage) wird wie im Beispiel 1 untersucht. Es wurde die höchste Note "3" erreicht (Bewertungsskala von visueller Bewertung - von 1 bis 3)

BCOO-A-OOCB'

worin

* Vergleichsbeispiele

**A:** 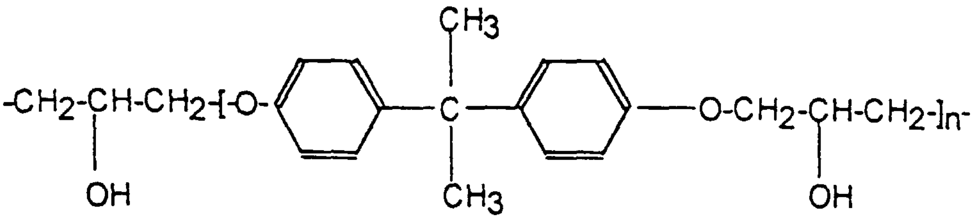

**B':** 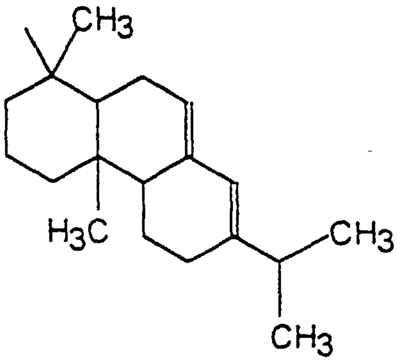

**B:** $CH_3$-[-$CH_2$-]$_x$- x= 11 : 23

ist.

**Patentansprüche**

1. Hilfsmittel zur Kunststoffverarbeitung, das ein Gemisch von Additionsprodukten von Fettsäuren und Kolophoniumharzsäuren an Epoxidharz enthält, das der Formel

   BCOO-A-OOCB'

   entspricht, in der A eine Gruppe der allgemeinen Formel I

   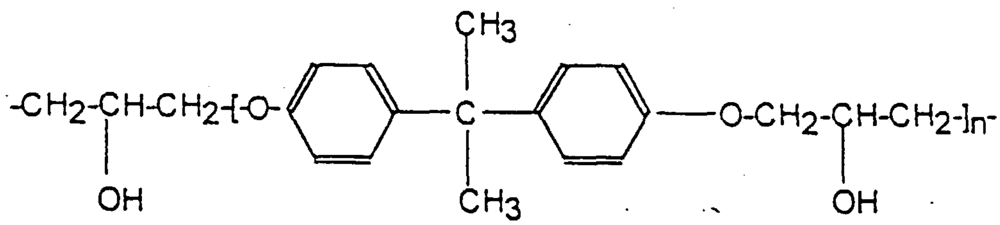 (I)

   ist, B eine Gruppe der Formel $CH_3(CH_2)_x$ (x = 11 - 23) darstellt und B' für eine durch Abspalten von Wasserstoff aus Kolophonium entstandene Gruppe steht, dadurch gekennzeichnet, daß es (bezogen auf 100 Gew.-Teile Additionsprodukt) 2 bis 50 Gew.-Teile Fettsäureamid und/oder Fettsäuresalze von zweiwertigen Metallen enthält.

2. Hilfsmittel nach Anspruch 1, das zusätzlich langkettige Fettsäureester und/oder Polyethylenwachse (Molekülmasse 300 - 5000) und gegebenenfalls 0,1 bis 7,0 Gew.-Teile Paraffin enthält.

3. Verfahren zur Herstellung von ungesättigten Polyesterharzen, bei dem man das Harz mit einem Hilfsmittel gemäß Anspruch 1 oder 2 modifiziert, wobei auf 100 Gew.-Teile ungesättigtes Polyesterharz 0,05 bis 5,0 Gew.-Teile des Hilfsmittels eingeführt werden.

4. Verfahren nach Anspruch 3, bei dem 0,5 bis 2,0 Gew.-Teile des Hilfsmittels eingeführt werden.

5. Verfahren nach Anspruch 3 oder 4, bei dem die Bestandteile des Hilfsmittels als zusammengeschmolzene Mischung in das Harz eingeführt werden.

6. Verfahren nach Anspruch 3 oder 4, bei dem die Bestandteile des Hilfsmittels nach Auflösen in einem organischen Lösungsmittel(gemisch) in das Harz eingeführt werden.

7. Verfahren nach Anspruch 3 oder 4, bei dem die Bestandteile des Hilfsmittels einzeln in das Harz eingeführt werden.

## Claims

1. Auxiliary agent for plastics processing containing a mixture of addition products of fatty acids and colophony resin acids on epoxide resin, corresponding to the formula

BCOO-A-OOCB'

in which A is a group of the general formula I

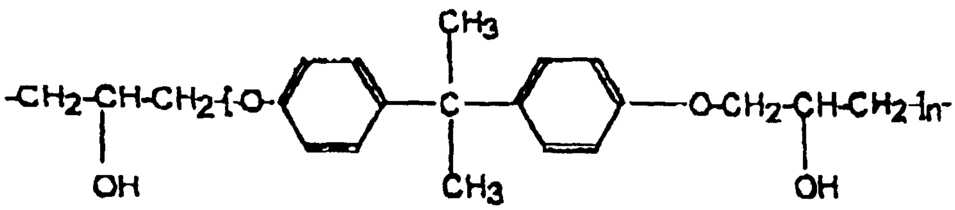

(I)

B represents a group with the formula $CH_3(CH_2)_x$ (x = 11 - 23) and B' stands for a group formed by cleaving hydrogen from colophony, characterised in that it contains 2 to 50 parts by weight of fatty acid amide and/or fatty acid salts of divalent metals (relative to 100 parts by weight of addition product).

2. Auxiliary agent according to Claim 1, which additionally contains long chain fatty acid ester(s) and/or polyethylene waxes (molecular mass 300 - 5000) and optionally 0.1 to 7.0 parts by weight of paraffin.

3. Process for manufacturing unsaturated polyester resins in which the resin is modified with an auxiliary agent according to Claim 1 or 2, whereby 0.05 to 5.0 parts by weight of the auxiliary agent is introduced per 100 parts by weight of unsaturated polyester resin.

4. Process according to Claim 3 in which 0.5 to 2.0 parts by weight of the auxiliary agent is introduced.

5. Process according to Claim 3 or 4 in which the components of the auxiliary agent are introduced into the resin as a fused mixture.

6. Process according to Claim 3 or 4 in which the components of the auxiliary agent are introduced into the resin after dissolution in an organic solvent (mixture).

7. Process according to Claim 3 or 4 in which the components of the auxiliary agent are introduced into the resin individually.

## Revendications

1. Adjuvant pour la transformation de matières plastiques, qui contient un mélange de produits d'addition d'acides

gras et d'acides résiniques de colophane sur de la résine époxyde, qui correspond à la formule

BCOO-A-OOCB',

dans laquelle A est un groupe de formule générale I

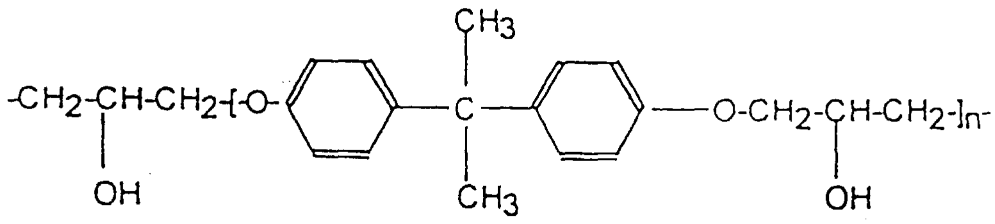 (I),

B représente un groupe de formule $CH_3(CH_2)_x$ (x = 11 à 23) et B' un groupe obtenu en enlevant un atome d'hydrogène à la colophane, caractérisé en ce qu'il contient (par rapport à 100 parties en poids de produit d'addition) de 2 à 50 parties en poids d'amide d'acide gras et/ou de sels d'acide gras de métaux divalents.

**2.** Adjuvant selon la revendication 1, qui contient des esters d'acide gras additionnels à longue chaîne et/ou des cires de polyéthylène (masse moléculaire de 300 à 5000) et éventuellement de 0,1 à 7,0 parties en poids de paraffine.

**3.** Procédé pour la préparation de résines de polyester insaturées, dans lequel on modifie la résine avec un adjuvant selon la revendication 1 ou 2, ce par quoi on introduit pour 100 parties en poids de résine de polyester insaturée de 0,05 à 5,0 parties en poids de l'adjuvant.

**4.** Procédé selon la revendication 3, dans lequel on introduit de 0,5 à 2,0 parties en poids de l'adjuvant.

**5.** Procédé selon la revendication 3 ou 4, dans lequel on introduit les composants de l'adjuvant dans la résine sous la forme de mélange fondu.

**6.** Procédé selon la revendication 3 ou 4, dans lequel on introduit les composants de l'adjuvant dans la résine après dissolution dans un solvant ou un mélange de solvants organiques.

**7.** Procédé selon la revendication 3 ou 4, dans lequel on introduit séparément les composants de l'adjuvant dans la résine.